# EUROPÄISCHE PATENTANMELDUNG

(11) **EP 0 892 477 A2**
(43) Veröffentlichungstag der Anmeldung: **20.01.1999**
(21) Anmeldenummer: 98104741.8
(22) Anmeldetag: 17.03.1998
(51) Int. Cl.: H02B 11/12

(54) **Anschlusskasten für ein Autoradio**

(30) Priorität: 14.07.1997 DE 19730048
(71) Anmelder: ROBERT BOSCH GMBH, 70442 Stuttgart (DE)
(72) Erfinder: Köppen, Jens, 31199 Diekholzen (DE); Fritsch, Thomas, 31137 Hildesheim (DE); Macha, Vladimir, 31141 Hildesheim (DE); Arndt, Rudolf, 31177 Harsum (DE)

(57) **Zusammenfassung**

Bei einem Anschlußkasten für ein Autoradio zur Befestigung an einer winkeligen Ausnehmung (30) des Autoradiogehäuses, an dessen winkelig zueinander stehenden Wandabschnitten (28, 29) der Anschlußkasten mit einer breiten Seite (15) und einer schmalen Seite anliegt, wobei Bodenkontakte (7, 8) des Anschlußkastens in Anschlußkontakten (33, 34) des Autoradios außerhalb des Autoradiogehäuses durch eine Einschubbewegung in Richtung des Bodens (25) kontaktierbar sind, entsteht eine automatische Befestigung an dem Autoradiogehäuse nach Durchführung der Einschubbewegung dadurch, daß Haltewinkel (22, 12) zum Übergreifen der Oberseiten und Anliegen auf der Innenseite der Wandabschnitte (28, 29) des Autoradiogehäuses vorgesehen sind und das wenigstens eine Seite des Anschlußkastens mit wenigstens einer Arretierungsfeder (13, 23) versehen ist, die zum Arretieren entgegen der Einschubbewegung durch Einrasten in eine zugehörige Ausnehmung (35, 37) in dem betreffenden Wandabschnitt (28, 29) am Ende der Einschubbewegung ausgebildet ist. Eine Befestigung des Anschlußkastens an dem Autoradiogehäuse durch Verschraubung o.ä. entfällt daher.

## Beschreibung

Die Erfindung betrifft einen Anschlußkasten für ein Autoradio zur Befestigung an einer winkeligen Ausnehmung des Autoradiogehäuses, an dessen winkelig zueinander stehenden Wandabschnitten der Anschlußkasten mit einer breiten Seite und einer schmalen Seite anliegt, wobei Bodenkontakte des Anschlußkastens in Anschlußkontakten des Autoradios außerhalb des Autoradiogehäuses durch eine Einschubbewegung in Richtung des Bodens kontaktierbar sind.

Derartige Anschlußkästen, für die die winkelige Ausnehmung des Autoradiogehäuses gemacht ist, sind beispielsweise durch das von der Blaupunkt-Werke GmbH, Hildesheim, vertriebene Autoradio Typ "Coburg 85" bekannt. Sie dienen dazu, externe Geräte oder externe Regelungen an das Autoradio anzuschließen. Darüber hinaus nehmen sie regelmäßig wenigstens eine Sicherung auf. Übliche externe Geräte, die über den Anschlußkasten an das Autoradio angeschlossen werden sind beispielsweise CD-Wechsler und Nachverstärker für die Audiosignale. Externe Regelungen betreffen die Helligkeitsregelung für die Autoradiobeleuchtung, insbesondere im Nachtdesign, sowie eine Lautstärkeregelung und ggfs. eine Stummschaltung während eine Telefonats im Auto. Die bekannten Anschlußkästen werden mit ihren als Stiftkontakte ausgebildeten Bodenkontakten in entsprechenden Anschlußbohrungen einer gedruckten Schaltungsplatine kontaktiert. Die gedruckte Schaltungsplatine ragt mit den Anschlußbohrungen aus dem Autoradiogehäuse in die winkelige, im allgemeinen rechtwinkelige, Ausnehmung hinein, so daß die Kontaktierung durch Verlötung außerhalb des Autoradiogehäuses erfolgt. Der Anschlußkasten wird dann an das Autoradiogehäuse angeschraubt, wobei die Schraubverbindung regelmäßig in der breiten Seite des Anschlußkastens vorgesehen ist.

Die breite Seite des Anschlußkastens wird regelmäßig durch eine gedruckte Schaltungsplatine abgeschlossen, die in dem Anschlußkasten von dem Autoradiogehäuse weg zeigen mit Steckerkontakten verbunden ist, so daß in die vom Autoradiogehäuse weg zeigende Vorderseite des Anschlußkastens entsprechende Anschlußstecker einsteckbar sind.

Da es vorkommen kann, daß die Anzahl der benötigten Verbindungskontakte zum Autoradio die Anzahl der Bodenkontakte übersteigt, ist es bekannt, an die gedruckte Schaltungsplatte des Anschlußkastens Flachbandkabel zu kontaktieren und diese als Kabelverbindungen in das Innere des Autoradios hineinzuführen und dort mit einer Steckverbindung zu kontaktieren (vgl. z.B. Autoradio Typ "Coburg 85").

Die Montage des Anschlußkastens, die üblicherweise mittels einer, vorzugsweise mittels zweier Blechschrauben am Autoradiogehäuse erfolgt, gestaltet sich wegen des Schraubvorganges etwas umständlich. Dies macht sich insbesondere dann bemerkbar, wenn aufgrund von neuen Zusatzgeräten ein neuer Anschlußkasten erforderlich wird.

Die vorliegende Erfindung geht daher von der Problemstellung aus, die Montage des Anschlußkastens zu vereinfachen.

Ausgehend von dieser Problemstellung ist erfindungsgemäß ein Anschlußkasten der eingangs erwähnten Art dadurch gekennzeichnet, daß Haltewinkel zum Übergreifen der Oberseiten und Anliegen auf der Innenseite der Wandabschnitte des Autoradiogehäuses vorgesehen sind und daß wenigstens eine Seite des Anschlußkastens mit wenigstens einer Arretierungsfeder versehen ist, die zum Arretieren entgegen der Einschubbewegung durch Einrasten in eine zugehörige Ausnehmung in dem betreffenden Wandabschnitt am Ende der Einschubbewegung ausgebildet ist.

Der erfindungsgemäße Anschlußkasten befestigt sich bei der Einschubbewegung für die Kontakte von selbst, wobei die Lösebewegung entgegen der Einschubbewegung durch die wenigstens eine Arretierungsfeder verhindert wird und eine Fixierung des Anschlußkastens senkrecht zu den Wandabschnitten mit Hilfe der Haltewinkel gewährleistet ist. Dabei wird zweckmäßigerweise die Winkeligkeit der Ausnehmung ausgenutzt, so daß das Übergreifen der beiden winkelig zueinander stehenden Wandabschnitte eine Fixiereung in den Freiheitsgraden parallel zur Bodenplatine des Autoradios erfolgt, während die Fixierung senkrecht dazu durch die bereits erwähnten Arretierungsfedern gewährleistet ist.

Durch den erfindungsgemäßen Anschlußkasten entfällt daher vollständig der Befestigungsvorgang am Autoradiogehäuse durch Verschrauben o. dgl.. Für die Demontage ist lediglich das Lösen der Arretierungsfedern, beispielsweise mit Hilfe eines Schraubendrehers, erforderlich. Dies ist durch einen oder zwei schnelle Handgriffe leicht zu bewerkstelligen.

Die Stabilität der Arretierung wird dadurch vergrößert, daß sich eine Arretierungsfeder auf der an einem Bandabschnitt anliegenden breiten Seite und eine Arretierungsfeder auf der entsprechenden schmalen Seite des Anschlußkastens befindet.

Dabei ist es zweckmäßig, wenn der Haltewinkel auf der breiten Seite an dem von der schmalen Seite entfernt liegenden Ende angeordnet ist.

Der Haltewinkel auf der schmalen Seite kann sich auf einer geringeren Höhe als der Haltewinkel auf der breiten Seite befinden. Voraussetzung hierzu ist, daß der Wandabschnitt des Autoradiogehäuses, an dem die schmale Seite anliegt, in diesem Bereich eine niedrigere Wandhöhe, beispielsweise durch einen nach oben offenen Schlitz, aufweist.

In einer für manche Anwendungsfälle besonders zweckmäßigen Ausführungsform der Erfindung ist der Haltewinkel auf der schmalen Seite mit einem an den Anschlußkasten angesetzten und in das Autoradiogehäuse hineinragenden Gehäuseansatz ausgebildet. Der Gehäuseansatz kann mit dem Anschlußkasten über eine Brücke verbunden sein, durch die ein nach unten offener Schlitz ausgebildet wird, mit dem der Anschlußkasten den nach oben offenen Schlitz in dem entsprechenden Wandabschnitt des Autoradiogehäuses übergreift.

Der in das Innere des Autoradiogehäuses ragende Gehäuseansatz ist vorzugsweise mit Bodenkontakten zur Kontaktierung mit Anschlußkontakten innerhalb des Autoradiogehäuses versehen. Der Gehäuseansatz kann daher in besonders vorteilhafter Weise dazu verwendet werden, etwaige weitere erforderliche Verbindungen mit dem Autoradio herzustellen, die durch die Bodenkontakte des Anschlußkastens außerhalb des Autoradiogehäuses nicht kontaktierbar sind. Auf die Realisierung umständlicher Kabelkontaktierungen zum Innern des Autoradiogehäuses kann daher mit dieser Ausführungsform der Erfindung regelmäßig verzichtet werden.

Der Anschlußkasten ist am Gehäuseansatz vorzugsweise mit einer Aufnahmekammer versehen, die oberhalb des Haltewinkels der schmalen Seite mit einer Haupt-Aufnahmekammer verbunden ist, so daß eine Schaltungsplatine als einheitliches Stück in einer den Haltewinkel überbrückenden Form in die Aufnahmekammern einsetzbar ist und so die Verdrahtung für die Kontaktierung außerhalb und innerhalb des Autoradiogehäuses zur Verfügung stellt.

Die Erfindung soll im folgenden anhand eines in der Zeichnung dargestellten Ausführungsbeispiels näher erläutert werden. Es zeigen:
- Figur 1 -: eine Draufsicht auf eine breite Anschlußseite eines Anschlußkastens
- Figur 2 -: eine Draufsicht auf eine breite Seite eines Anschlußkastens, die an einem Wandabschnitt des Autoradiogehäuses anliegt
- Figur 3 -: eine Draufsicht auf eine schmale Seite eines Anschlußkastens
- Figur 4 -: eine perspektivische Darstellung eines Teils eines Autoradiogehäuses bestehend aus einer Bodenplatine und Seitenwänden, die eine winkelige Ausnehmung zur Aufnahme des Anschlußkastens gemäß den Figuren 1 bis 3 aufweisen
- Figur 5 -: eine Draufsicht auf die Anordnung gemäß Figur 4.

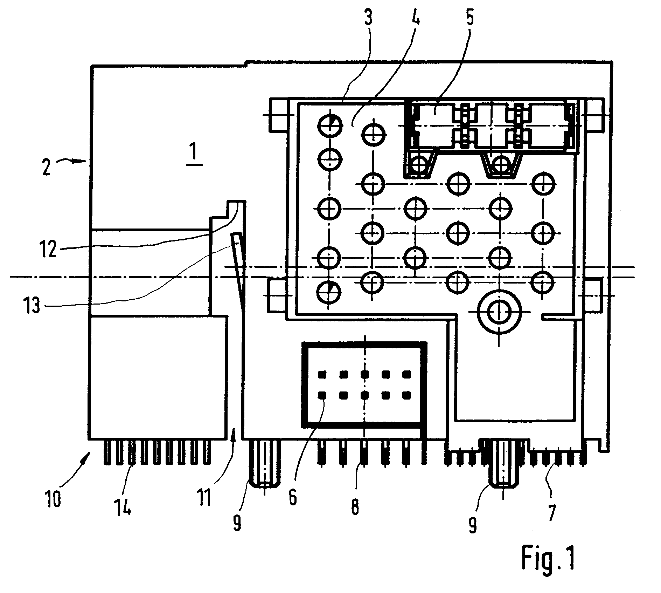

Der in den Figuren 1 bis 3 dargestellte Anschlußkasten weist auf einer in Figur 1 dargestellten Anschlußseite 1 einen im wesentlichen rechteckigen Grundkörper 2 auf, auf dem eine erhabene Rahmenwandung 3 befindet, die eine Steckeraufnahmekammer 4 und eine Sicherungsaufnahmekammer 5 ausbildet. Kontakt-Durchgangsöffnungen 6 ermöglichen die Aufnahme eines weiteren Steckers mit Stiftkontakten.

Von den Aufnahmekammern 4, 5 ragt eine erste Gruppe von stiftförmigen Bodenkontakten 7 aus der Unterkante des Grundkörpers 2 heraus. Unterhalb der Kontakt-Durchgangsöffnungen 6 befindet sich eine zweite Gruppe von stiftförmigen Bodenkontakten 8. Die Kontaktierung der Bodenkontakte 7, 8 erfordert eine Einschubbewegung von oben nach unten, also in Längsrichtung der stiftförmigen Bodenkontakte 7, 8. Die Einschubbewegung wird durch aus der Unterseite des Grundkörpers 2 herausragenden Kunststoffbolzen 9 geführt.

Der Grundkörper 2 weist einen Gehäuseansatz 10 auf, der über eine einen nach unten offenen Schlitz 11 überbrückende Brücke 12 mit dem die Aufnahmekammern 4, 5 tragenden Teil verbunden ist. In den nach unten offenen Schlitz 11 ragt eine aus dem Material des Grundkörpers 2 geformte Feder 13 hinein. Die Feder 13 ragt von unten nach oben schräg verlaufend zunehmend in den Schlitz 11 hinein.

Der Gehäuseansatz 10 weist eine dritte Gruppe von stiftförmigen Bodenkontakten 14 auf, die aus dem Grundkörper 2 nach unten vorragen.

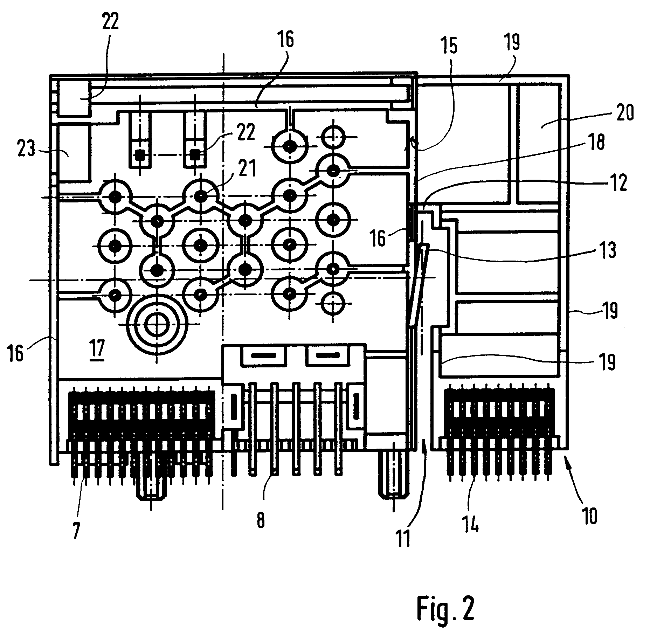

Figur 2 läßt die Gruppen der Bodenkontakte 7, 8, 14 erkennen, die im wesentlichen auf der in Figur 2 dargestellten, eine Rückseite bildenden breiten Seite 15 geführt sind.

Oberhalb der Bodenkontakte 7, 8 wird durch Begrenzungswände 16 eine Haupt-Aufnahmekammer 17 begrenzt. Oberhalb des nach unten offenen Schlitzes 11 ist die parallel zum Schlitz 11 verlaufende Begrenzungswand 16 mit einer Ausnehmung 18 versehen. Im Gehäuseansatz 10 bilden eine obere, eine seitliche und eine im wesentlichen parallel zum Schlitz 11 verlaufende Begrenzungswand 19 eine Aufnahmekammer 20, die über die Ausnehmung 18 mit der Hauptaufnahmekammer 17 verbunden ist, so daß in die über die Ausnehmung 18 miteinander verbundenen Aufnahmekammern 17, 20 eine einheitliche Platine einlegbar ist, mit der Kontaktierungen zu den Bodenkontakten 7, 8, 14 sowie zu Steckeranschlußkontakten 21 bzw. Sicherungsanschlußkontakten 22 herstellbar sind.

Figur 2 läßt am oberen Rand an dem vom Gehäuseansatz 10 entfernten Ende einen Haltewinkel 22 und eine darunter angeordnete Arretierungsfeder 23 erkennen.

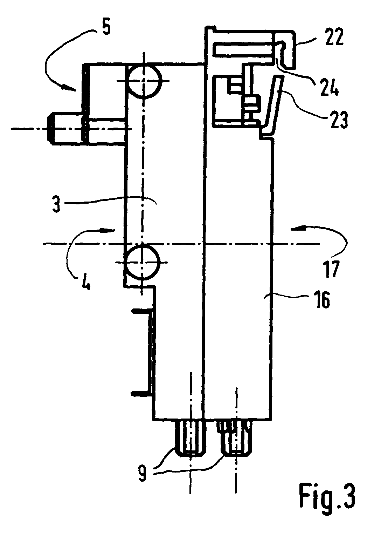

Figur 3 verdeutlicht in einer Seitenansicht die Form des Haltewinkels 22, der eine seitlich über den Körper des Anschlußkastens ragende L-Form aufweist und so einen nach unten offenen Aufnahmeschlitz 24 bildet. In die Verlängerung des nach unten offenen Aufnahmeschlitzes 24 ragt von unten zunehmend die Arretierungsfeder 23 hinein. Die Seitenansicht läßt die Wand 3 für die Stecker-Aufnahmekammer 4 und die Sicherungsaufnahmekammer 5 erkennen. Zur Rückseite hin erstreckt sich die Wand 16 für die Haupt-Aufnahmekammer 17.

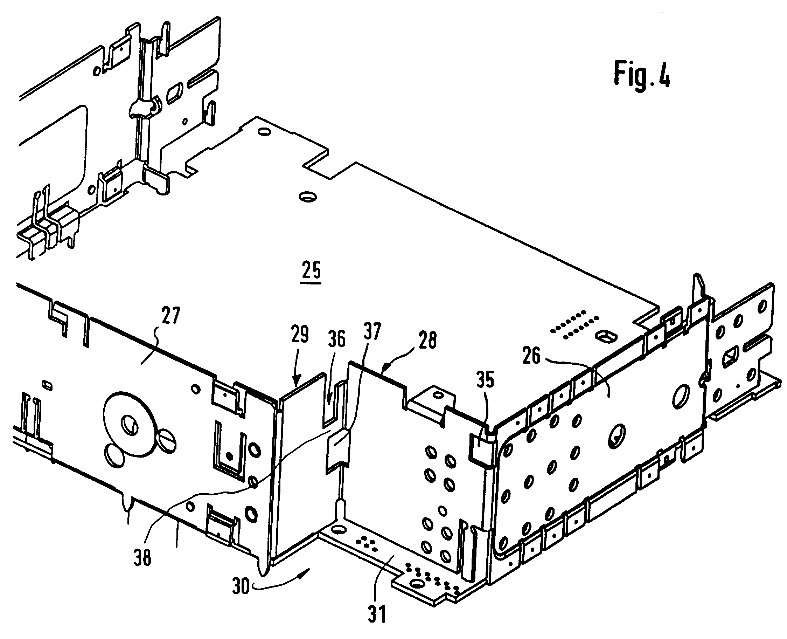

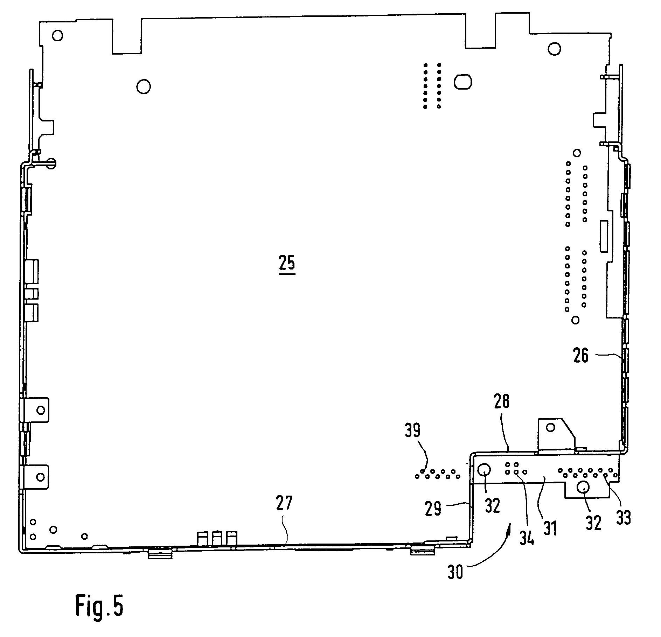

Der in den Figuren 1 bis 3 dargestellte Anschlußkasten dient zur Befestigung und Kontaktierung an einem Autoradiogehäuse, das in den hier interessierenden Teilen in den Figuren 4 und 5 dargestellt ist. Der Boden wird durch eine Bodenplatine 25 gebildet, die durch metallische Seitenwände 26 und eine metallische Rückwand 27 begrenzt ist. Durch einen die Rückwand 27 versetzt nach innen fortsetzenden Wandabschnitt 28 und einen, eine kürzere Seitenwand 26 ebenfalls nach innen versetzt fortsetzenden Wandabschnitt 29 ist eine rechtwinkelige Ausnehmung 30 gebildet. Eine Ausnehmung in der Bodenplatine 25 ist etwas kleiner ausgeführt, so daß in die Ausnehmung 30 ein Streifen 31 der Bodenplatine hineinragt. Der Streifen 31 erstreckt sich im wesentlichen parallel zu dem Wandabschnitt 28, der länger ausgebildet ist als der senkrecht dazustehende Wandabschnitt 29.

Auf dem Streifen 31 sind Führungsöffnungen 32 erkennbar, die zur Aufnahme und Führung der Führungsbolzen 9 des Anschlußkastens dienen.

In dem Streifen 31 befinden sich ferner zwei Gruppen von Kontaktöffnungen 33, 34, wobei die Kontaktöffnungen 33 zum Zusammenwirken mit den Bodenkontakten 7 und die Kontaktöffnungen 34 zum Zusammenwirken mit den Bodenkontakten 8 ausgebildet sind.

Figur 4 läßt erkennen, daß der Wandabschnitt 28 am Übergang zur Seitenwand 26 mit geringem Abstand zu seiner oberen Kante mit einer rechteckigen Ausnehmung 35 versehen ist. Diese Ausnehmung dient zum Zusammenwirken mit der Arretierungsfeder 23, wenn der Haltewinkel 22 oberhalb der Ausnehmung 35 die obere Kante des Wandabschnitts 28 so übergreift, daß die obere Kante im wesentlichen vollständig in den nach unten offenen Aufnahmeschlitz 24 des Haltewinkels 22 eingefahren ist, so daß der Haltewinkel 22 auch an der zum Innern des Autoradiogehäuses zeigenden Seite des Wandabschnitts 28 anliegt.

Figur 4 läßt ferner erkennen, daß der Wandabschnitt 29 mit einem nach oben offenen Schlitz 36 versehen ist unterhalb dessen sich eine rechteckige Ausnehmung 37 befindet.

Der nach oben offene Schlitz 36 wirkt mit dem nach unten offenen Schlitz 11 des Anschlußkastens derart zusammen, daß die beiden Schlitze 11, 36 durch die Einschubbewegung für die Bodenkontakte 7, 8 in die Kontaktöffnungen 33, 34 ineinander greifen und aufgrund ihrer Ausrichtung senkrecht zueinander miteinander verzahnen. Der zwischen dem Schlitz 36 und der Ausnehmung 37 befindliche Steg 38 drückt während der Einschubbewegung die Feder 13 aus dem Bereich des Schlitzes 11, bis die Ausnehmung 37 vollständig mit der Feder 13 fluchtet. Zu diesem Zeitpunkt schnellt die Feder 13 in die in den Figuren 1 und 2 dargestellte Ausgangsstellung zurück und greift in die Ausnehmung 37. Durch die in die Ausnehmung 37 greifende Arretierungsfeder 13 und die in die Ausnehmung 35 eingreifende Arretierungsfeder 23 ist der Anschlußkasten in der kontaktierten Stellung arretiert und kann nicht versehentlich nach oben wieder herausgezogen werden. Die Fixierung in der Ebene parallel zur Bodenplatine 25 ist durch den den Wandabschnitt 28 übergreifende Haltewinkel 22 und den nach unten offenen Schlitz 11, der ebenfalls als Haltewinkel den Wandabschnitt 29 im Bereich des nach oben offenen Schlitzes 36 übergreift, gewährleistet.

Figur 5 verdeutlicht, daß der Gehäuseansatz 10 über die Brücke 12 in das Innere des Gehäuses ragt und mit seinen Bodenkontakten 14 in Kontaktöffnungen 39 der Bodenplatine 25 im Innern der metallischen Gehäusewandung des Autoradiogehäuses kontaktiert wird.

Die bisher erforderliche zusätzliche Kontaktierung mittels Flachbandkabeln o.ä. kann daher entfallen. Die Kontaktierung der Bodenkontakte 14 in den Kontaktöffnungen 39 erfolgt mit der übrigen Kontaktierung durch die Einschubbewegung bis zur Verriegelung durch die Rastfedern 13, 23 und Fixierung des Anschlußkastens durch die Haltewinkel 22 und 12 (Brücke des nach unten offenen Schlitzes 11).

## Patentansprüche

1. Anschlußkasten für ein Autoradio zur Befestigung an einer winkeligen Ausnehmung (30) des Autoradiogehäuses, an dessen winkelig zueinander stehenden Wandabschnitten (28, 29) der Anschlußkasten mit einer breiten Seite (15) und einer schmalen Seite anliegt, wobei Bodenkontakte (7, 8) des Anschlußkastens in Anschlußkontakten (33, 34) des Autoradios außerhalb des Autoradiogehäuses durch eine Einschubbewegung in Richtung des Bodens (25) kontaktierbar sind, **dadurch gekennzeichnet, daß** Haltewinkel (22, 12) zum Übergreifen der Oberseiten und Anliegen auf der Innenseite der Wandabschnitte (28, 29) des Autoradiogehäuses vorgesehen sind und das wenigstens eine Seite des Anschlußkastens mit wenigstens einer Arretierungsfeder (13, 23) versehen ist, die zum Arretieren entgegen der Einschubbewegung durch Einrasten in eine zugehörige Ausnehmung (35, 37) in dem betreffenden Wandabschnitt (28, 29) am Ende der Einschubbewegung ausgebildet ist.

2. Anschlußkasten nach Anspruch 1, dadurch gekennzeichnet, daß sich eine Arretierungsfeder (23) auf der an einem Wandabschnitt (28) anliegenden breiten Seite (15) und eine Arretierungsfeder (13) auf der schmalen Seite des Anschlußkastens befindet.

3. Anschlußkasten nach Anspruch 1 oder 2, dadurch gekennzeichnet, daß der Haltewinkel (22) auf der breiten Seite am von der schmalen Seite entfernt liegenden Ende angeordnet ist.

4. Anschlußkasten nach einem der Ansprüche 1 bis 3, dadurch gekennzeichnet, daß der Haltewinkel (12) auf der schmalen Seite auf einer geringeren Höhe als der Haltewinkel (22) auf der breiten Seite (15) ausgebildet ist.

5. Anschlußkasten nach einem der Ansprüche 1 bis 4, dadurch gekennzeichnet, daß der Haltewinkel (12) auf der schmalen Seite mit einem an den Anschlußkasten angesetzten und in das Autoradiogehäuse hineinragenden Gehäuseansatz (10) gebildet ist.

6. Anschlußkasten nach Anspruch 5, dadurch gekennzeichnet, daß der Gehäuseansatz (10) mit Bodenkontakten (14) zur Kontaktierung mit Anschlußkontakten (39) innerhalb des Autoradiogehäuses versehen ist.

7. Anschlußkasten nach Anspruch 5 oder 6, dadurch gekennzeichnet, daß eine Aufnahmekammer (20) des Gehäuseansatzes (10) oberhalb des Haltewinkels (12) der schmalen Seite mit einer Haupt-Aufnahmekammer (17) verbunden ist und das eine Schaltungsplatine als einheitliches Stück in einer den Haltewinkel (12) überbrückenden Form ausgebildet ist.
